# EUROPEAN PATENT SPECIFICATION

(11) **EP 4 427 648 B1**
(45) Date of publication and mention of the grant of the patent: **16.07.2025**
(21) Application number: 24157434.2
(22) Date of filing: 13.02.2024
(51) Int. Cl.: A47J 42/40

(54) **COFFEE GRINDER WITH LOAD CELL SUPPORT SYSTEM**
KAFFEEMÜHLE MIT WÄGEZELLENSTÜTZSYSTEM
MOULIN À CAFÉ AVEC SYSTÈME DE SUPPORT DE CELLULE DE CHARGE

(30) Priority: 08.03.2023 IT 202300004272
(43) Date of publication of application: 11.09.2024
(73) Proprietor: SIMONELLI GROUP S.P.A., 62020 Belforte del Chienti (MC) (IT)
(72) Inventor: CINGOLANI, Claudio, 62032 Camerino (MC) (IT); PARRINI, Mauro, 63821 Porto Sant'Elpidio (FM) (IT); FELIZIANI, Marco, 62029 Tolentino (MC) (IT)
(74) Representative: Cutropia, Gianluigi

(56) References cited:
- EP-A1- 3 424 379
- CN-A- 113 056 221
- CN-B- 110 691 540
- IT-A1- 202100 005 489

## Description

The present invention relates to a coffee grinder equipped with a load cell to detect the weight of the ground coffee and with a support system suitable for preventing a damage to the load cell.

Coffee grinders defined as "on-demand coffee grinders" are known, which grind coffee directly on a coffee extraction filter without the use of a measuring device. On-demand coffee grinders are more and more used in the market because they always provide fresh coffee powder for extraction.

The traditional on-demand coffee grinders are timed, meaning that one or more doses of ground coffee can be selected by setting a grinding time. So, every time, the coffee grinder dispenses the amount of coffee relative to the operation time of the motor. However, such a system is not very accurate because the amount of coffee powder in grams that is being dispensed is not constant as it depends on the degree of grinding and on the temperatures of the grinding unit of the machine. Such a known system is described in EP 3 424 379.

In order to solve such a drawback, a weighing system of the ground coffee is known, which can weigh the coffee powder directly inside the filter of the filter holder in order to have a constant dose of coffee in grams and thus a more consistent quality of the liquid coffee extracted by the coffee machine.

Such a weighing system generally uses a load cell as described in EP3023041A1 on behalf of the same applicant.

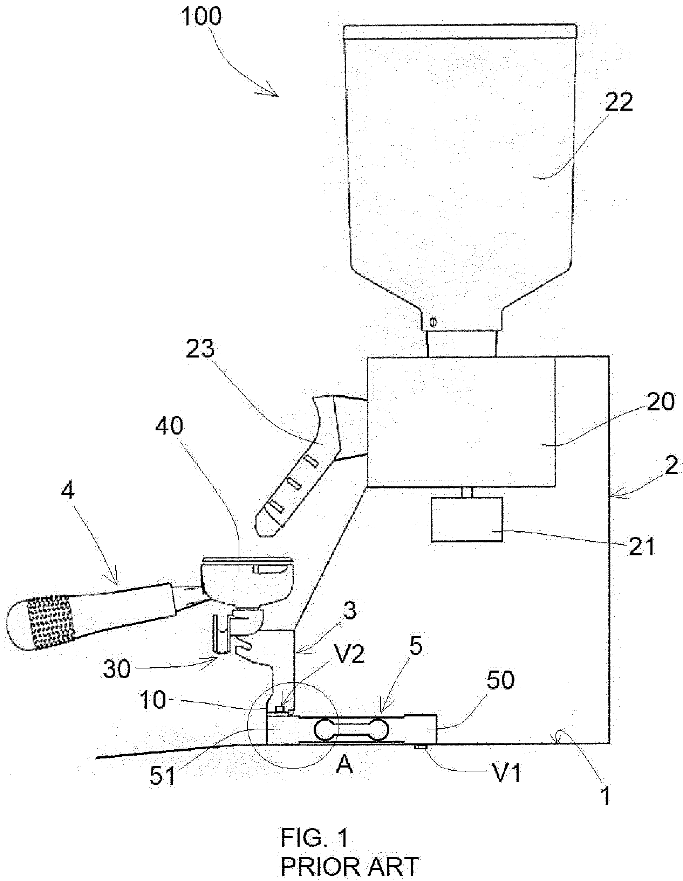

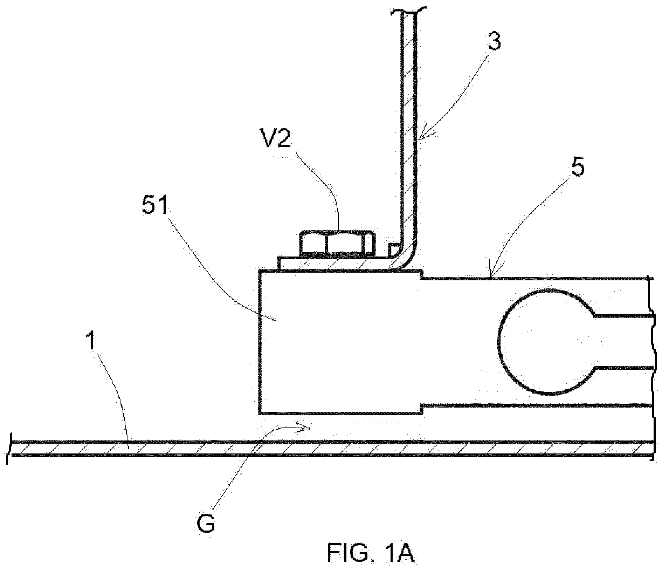

Fig. 1 shows a coffee grinder according to the prior art, which is indicated with reference numeral 100.

The coffee grinder (100) comprises a base (1) whereon a frame (2) is mounted. A grinding unit (20) driven by an electric motor (21) is arranged inside the frame (2).

A hopper (22) ending into the grinding unit (20) is mounted on the frame (2). Coffee beans are contained in the hopper (22).

The frame (2) supports a slide-shaped dispenser (23) in communication with the grinding unit (20) for dispensing the coffee powder.

The base (1) has a front partition (10) wherein a bracket (3) is movably mounted, said bracket (3) having a seat (30), generally in the shape of a fork, which is suitable for supporting a filter holder (4), so that the filter (40) of the filter holder is disposed under the dispenser (23) to receive the coffee powder.

The bracket (3) is connected to a load cell (5) to measure the weight of the coffee powder contained in the filter holder disposed in the seat (30) of the bracket.

The load cell (5) has a rear portion (50) and a front portion (51). The rear portion (50) of the load cell is attached to the base (1) by means of rear screw means (V1).

As shown in Fig. 1A, the front portion (51) of the load cell is fixed to the bracket (3) by means of front screw means (V2), in such a way that a gap (G) is provided between the base (1) and the front portion (51) of the load cell, said front portion (51) of the load cell being suitable for bending downwards in the gap (G) to measure the weight of the coffee fed into the filter (40) of the filter holder supported by the bracket (3).

The load cell (5) has a very high accuracy, usually to the tenth of a gram, in order to ensure consistency in measuring the weight of a dose of coffee powder. For such a purpose, load cells with a maximum load comprised in the range of 3 to 9 kg are generally used. It must be noted that a downward bending of the front portion (51) of the load cell of a few tenths of a millimeter, e.g. in the range of 0 to 0.5 mm, is sufficient to reach the maximum load of the load cell.

However, by operating the filter holder (4) quickly to obtain the dose of the ground coffee, the user may accidentally and energetically hit the seat (30) of the bracket, thus causing a downward bending of the front portion (51) of the load cell that is higher than the maximum load of the load cell, thus damaging the load cell. On the other hand, it must be considered that the base (1) generally consists in a thin sheet metal or plate that can get deformed and is not suitable for acting as stop to adequately stop a downward travel of the front portion (51) of the load cell.

Additionally, during the transportation of the coffee grinder (100) with the bracket (3) fixed to the load cell (5), the bracket (3) may vibrate due to impacts, thus causing a pressure in the front portion (51) of the load cell that is higher than the maximum load of the load cell, and damaging the load cell.

Moreover, the load cell (5) may get damaged if the seat (30) of the bracket is pushed upwards, thus bending the front portion (51) of the load cell upwards.

EP3424379A1 discloses a coffee grinder according to preamble of claim 1. Such a coffee grinder comprises a hopper for coffee beans, a grinding chamber, and a doser for ground coffee. The doser is floating and rests on a load cell that measures the weight of the empty doser and the weight of the coffee doses that enter a first or second chamber of the doser, allowing the weighed dose of coffee to be immediately delivered into a filter holder.

The purpose of the present invention is to eliminate the drawbacks of the prior art by providing a coffee grinder with a load cell support system suitable for preventing damaging the load cell.

Another purpose is to provide such a coffee grinder equipped with a load cell support system that is reliable and easy to install and use.

Another purpose is to provide such a coffee grinder equipped with a safety system that can be combined with the support system to lock the load cell in position during transportation to prevent damage to the load cell.

These purposes are achieved in accordance with the invention with the features of the appended independent claim 1.

Advantageous achievements of the invention appear from the dependent claims.

The coffee grinder equipped with a load cell support system according to the invention is defined in the independent claim 1.

In order to prevent damaging the load cell due to impacts on the bracket that are higher than the maximum weight compatible with the load cell, the applicant devised a load cell support having a front portion suitable for limiting a downward bending of the front portion of the load cell. In such a way, with a single piece, which consists in the support, it is possible to firmly secure the load cell to the base and create a solid stop for the front portion of the load cell with the front portion of the support in order to prevent an excessive deformation of the load cell that would result in breaking the load cell. Being a single body, such a support ensures a perfect alignment of the load cell, keeping the measurement error of the load cell fixed and minimal at all times.

The coffee grinder according to the invention further comprises a safety system that can be used during the transportation of the coffee grinder to prevent any movement of the load cell. Such a safety system comprises a tab of suitable thickness that is inserted between the front portion of the support and the front portion of the load cell during the transportation of the coffee grinder so as to keep the load cell in a non-bent position, preventing the deformation of the load cell due to vibrations and impacts on the bracket during transportation.

The safety system also comprises a safety screw that crosses the base, the support and the tab and is screwed into the front portion of the load cell to lock the front portion of the load cell during transportation.

When the coffee grinder is to be used, the safety screw is unscrewed and the tab is extracted so to provide the gap between the front portion of the support and the front wall of the load cell that is necessary for the front portion of the load cell to bend downward in order to weigh the ground coffee contained inside the filter holder.

Such a safety system allows for handling the coffee grinder without any risk of damage, keeping the load cell attached to its support and the bracket attached to the load cell. In order to use the coffee grinder after transportation, it is simply necessary to unscrew the safety screw and remove the tab.

Additional features of the invention will appear clearer from the following detailed description, which refers to merely illustrative and therefore not limiting embodiments, illustrated in the accompanying drawings, wherein:
Fig. 1 is a schematic side view of a coffee grinder according to the prior art;
Fig. 1A is an enlargement of a detail enclosed in circle A of Fig. 1;
Fig. 2 is a schematic side view of a coffee grinder according to the invention;
Fig. 3 is a perspective top view of a base of the coffee grinder according to the invention, illustrating a support that supports a load cell, shown in a safety configuration during the transportation of the coffee grinder;
Fig. 4 is a perspective bottom view of the base of Fig. 3;
Fig. 5 is a bottom view of the base of Fig. 3;
Fig. 6 is a sectional view taken along the plane VI-VI of Fig. 5;
Fig. 7 is an exploded sectional view of some parts of Fig. 6;
Fig. 8 is a sectional view taken along the plane VIII-VIII of Fig. 5;
Fig. 8A is an enlarged detail enclosed in circle A of Fig. 8;
Fig. 9 is an exploded sectional view of some parts of Fig. 8;
Fig. 10 is the same view as Fig. 3, except for it shows the load cell in operating configuration, ready for use;
Fig. 11 is a bottom view of the base of Fig. 10;
Fig. 12 is a sectional view taken along the plane XII-XII of Fig. 11;
Fig. 13 is a sectional view taken along the plane XIII-XIII of Fig. 11;
Fig. 13A is an enlarged detail of Fig. 13;
Fig. 14 is the same view as Fig. 8A, except for it shows a variant of the load cell support of the coffee grinder according to the invention, shown in a safety configuration during transportation;
Fig. 14A is the same view as Fig. 14, except for it is shown in operating configuration during the operation of the coffee grinder, wherein the safety screw is used as stop to limit an upward travel of the front portion of the load cell;
Fig. 15 is the same view as Fig. 14A, illustrating an improvement consisting of a bushing screwed onto the safety screw.

Hereafter, elements that are equal or corresponding to those already described are indicated with the same reference numerals, omitting their detailed description.

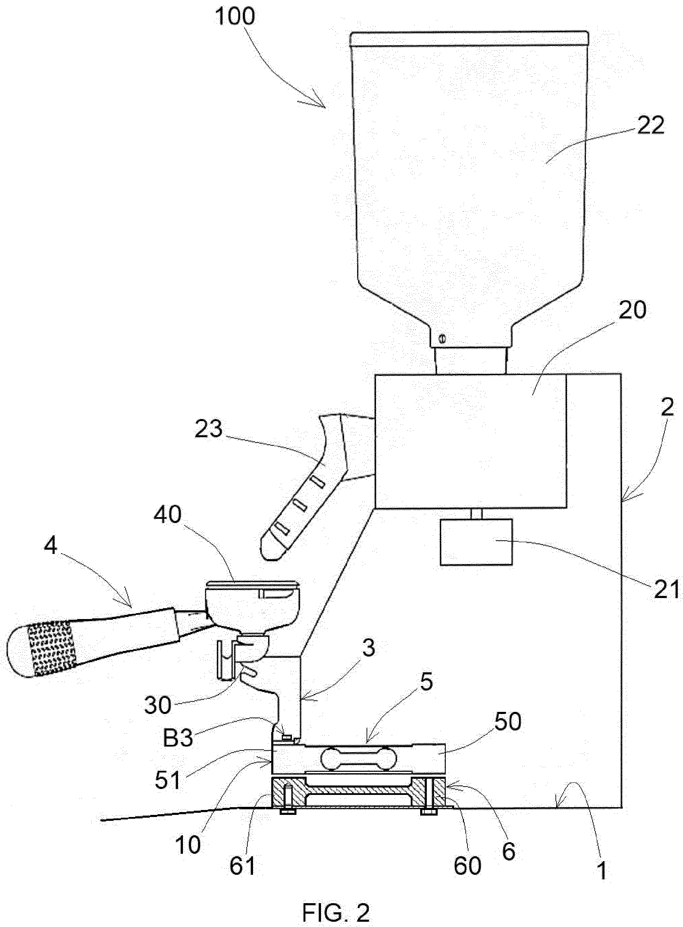

With reference to Fig. 2, a coffee grinder according to the invention is illustrated, which is comprehensively indicated with reference numeral 100.

The coffee grinder (100) comprises a support (6) attached to the base (1). The load cell (5) is mounted on the support (6).

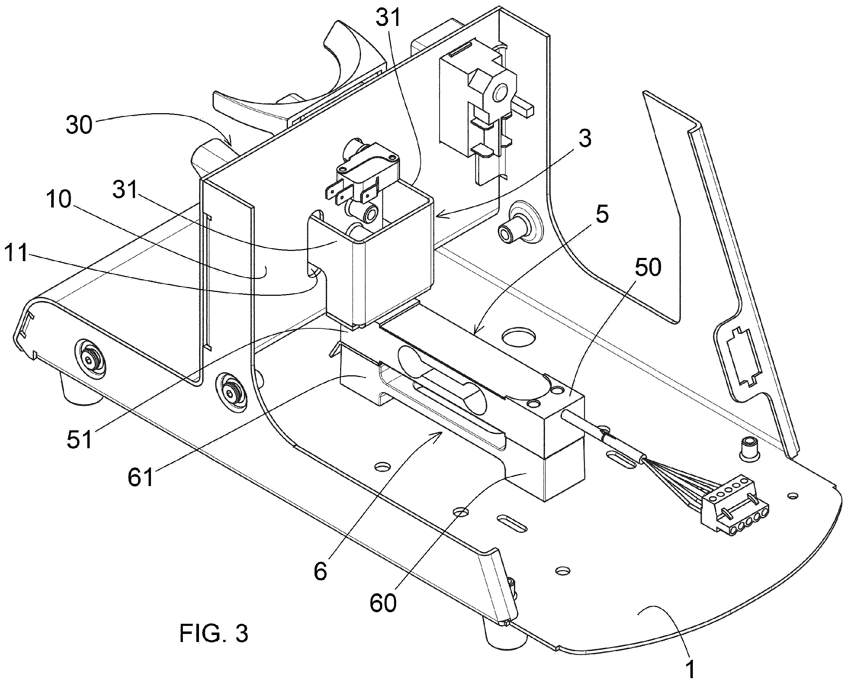

Referring to Fig. 3, the load cell (5) has a parallelepiped shape with a length greater than a width and a height substantially equal to the width. Thus, the load cell (5) has a longitudinal axis extending in the direction of its length.

The support (6) has a length equal to the length of the load cell (5), a width equal to the width of the load cell, and a height substantially equal to the height of the load cell. Thus, the support (6) has a longitudinal axis that extends in the direction of its length. The height or thickness of the support is greater than the thickness of the base (1).

The support (6) has a longitudinal section in the shape of an "H." The support (6) has a rear portion (60) and a front portion (61).

The support (6) is attached to the base (1) so that the longitudinal axis of the support is disposed at a centerline of the base, and the front portion (61) of the support is close to the front partition (10) of the base.

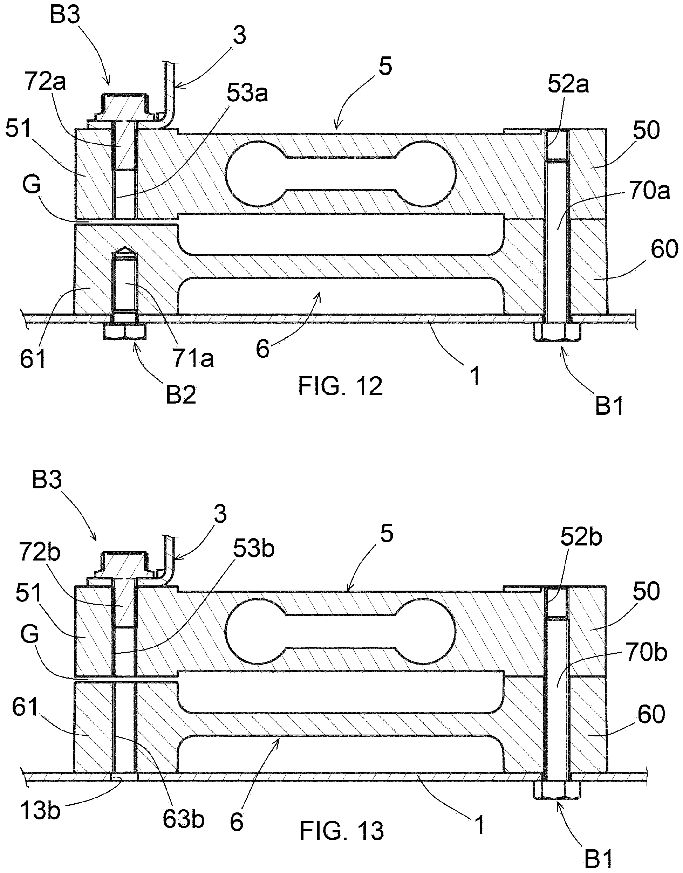

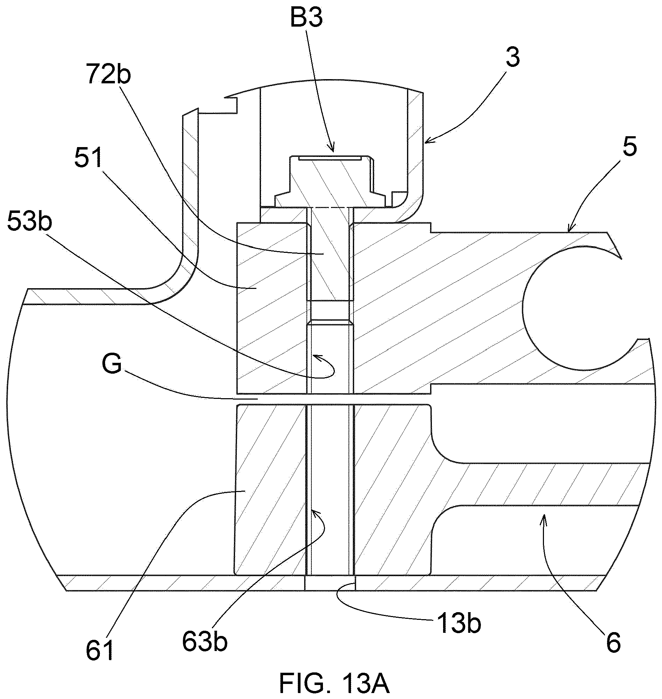

The load cell (5) is mounted on the support (6) so that the rear portion (50) of the load cell is firmly secured to the rear portion (60) of the support, and the front portion (51) of the load cell is spaced away from the front portion (61) of the support so as to leave a gap (G) (see Fig. 13A) between the front portion (61) of the support and the front portion (51) of the load cell. For such a purpose, the front portion (61) of the support has a lower height than the height of the rear portion (60) of the support.

The width (i.e. vertical extension) of the gap (G) is such to allow for a downward bending of the front portion (51) of the load cell that is lower than a maximum load limit of the load cell. Thus, the front wall (61) of the support (6) acts as stop for a downward bending travel of the front portion (51) of the load cell.

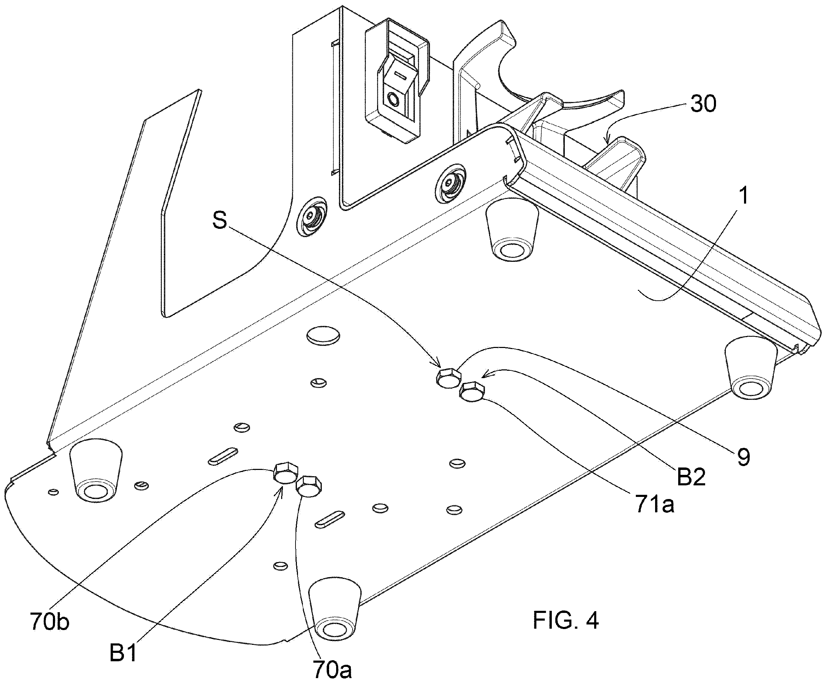

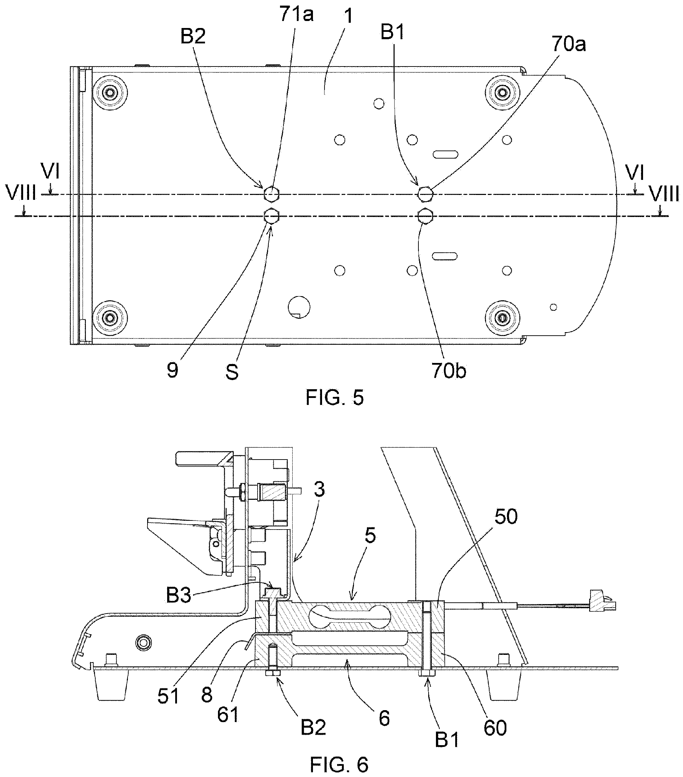

Referring to Figs. 4 and 5, first screw means (B1) secure the rear portion (60) of the support to the base (1) and the rear portion (50) of the load cell to the rear portion (60) of the support, and second screw means (B2) secure the front portion (61) of the support to the base (1). In view of the above, the support (6) is firmly fixed to the base (1) and the rear portion (50) of the load cell is fixed to the rear portion of the support so that the front portion (51) of the load cell can bend.

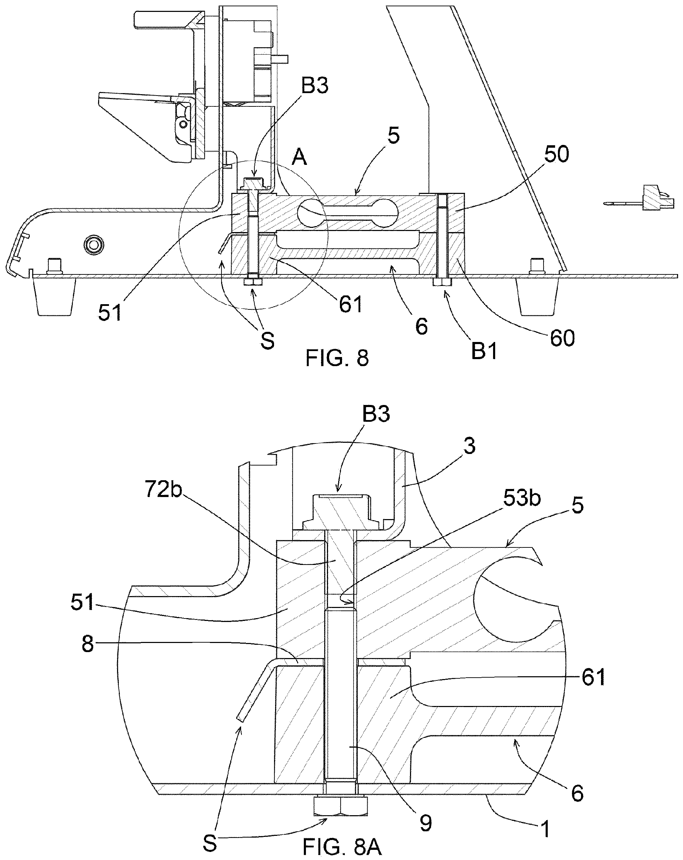

With reference to Figs. 6 and 8, third screw means (B3) secure the bracket (3) to the front portion (51) of the load cell.

As shown in Fig. 3, the bracket (3) has a fork with two arms (31) connected to the seat (30) that houses the filter holder (4). The arms (31) of the bracket are suitably mounted to slide vertically in slots (11) of the front partition (10) of the base. In such a way, when the ground coffee is fed into the filter (40) of the filter holder (4), the bracket (3) is lowered and the front portion (51) of the load cell is bent downwards, allowing for weighing.

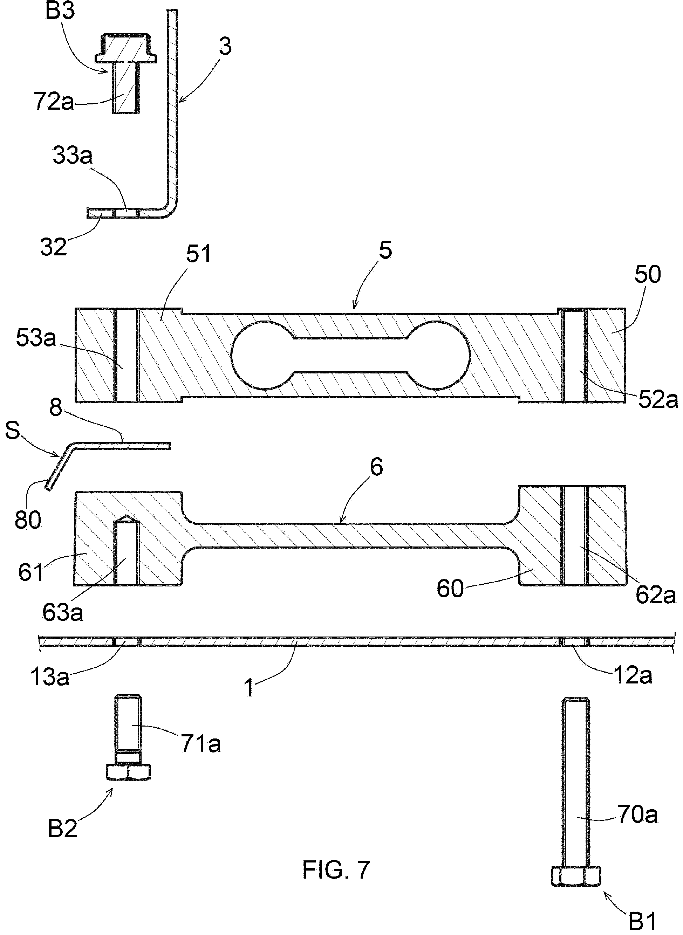

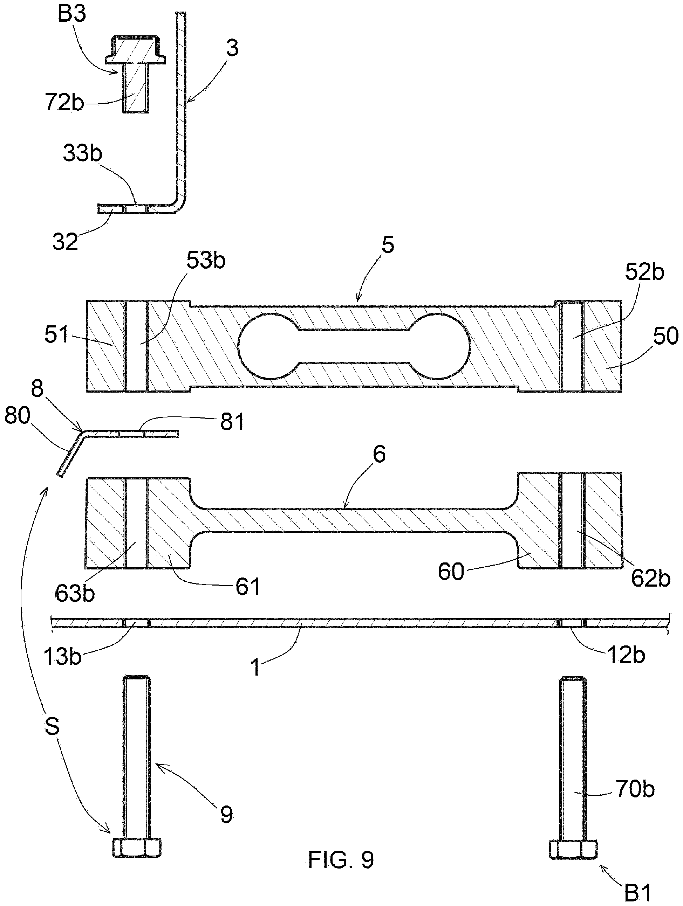

With reference to Figs. 7 and 9:
- the rear portion (60) of the support comprises a first through hole (62a) and a second through hole (62b), said holes possibly being threaded;
- the front portion (61) of the support comprises a first threaded hole (63a) that can be a blind hole or a through hole, and a second through hole (63b) that can be a threaded hole or an unthreaded hole as explained hereinafter;
- the rear portion (50) of the load cell comprises a first threaded hole (52a) and a second threaded hole (52b) that can be through holes or blind holes;
- the front portion (51) of the load cell comprises a first threaded hole (53a) can be a through hole or a blind hole and a second threaded through hole (53b) that must be a through hole;
- the base (1) has a pair of rear holes (12a, 12b) and a pair of front holes (13a, 13b);
- the bracket (3) has a horizontal shelf (32) with two holes (33a, 33b).

The first screw means (B1) comprise:
- a first rear screw (70a) that crosses the first hole (12a) of the pair of rear holes of the base and the first through hole (62a) of the rear portion (60) of the support and is screwed into the first threaded hole (52a) of the rear portion (50) of the load cell;
- a second rear screw (70b) that crosses the second hole (12b) of the pair of rear holes of the base and the second through hole (62b) of the rear portion (60) of the support and is screwed into the second threaded hole (52b) of the rear portion (50) of the load cell.

The second screw means (B2) comprise a front screw (71a) that crosses the first hole (13a) of the pair of front holes of the base and is screwed into the blind threaded hole (53a) of the front portion (61) of the support.

The third screw means (B3) comprise:
- a first upper screw (72a) that crosses the first hole (33a) of the pair of holes of the bracket and is screwed into the first threaded hole (53a) of the front portion (51) of the load cell;
- a second upper screw (72b) that crosses the second hole (33b) of the pair of holes of the bracket and is screwed into the second threaded through hole (53b) of the front portion (51) of the load cell.

It should be noted that the length of the shank of the second upper screw (72) is shorter than the length of the second threaded through hole (53b) of the front portion (51) of the load cell, so that a lower part of the thread of the second threaded through hole (53b) of the front portion (51) of the load cell remains free.

The coffee grinder (100) comprises a safety system (S) for locking the load cell (5) in position during the transportation of the coffee grinder, so as to prevent the front portion (51) of the load cell from bending due to accidental impacts on the seat (30) of the bracket.

The safety system (S) comprises a tab (8) having a thickness equal to the width of the gap (G) provided between the front portion (61) of the support and the front portion (51) of the load cell. The tab (8) is disposed in the gap (G) between the front portion (61) of the support and the front portion (51) of the load cell, so that the front portion (51) of the load cell is prevented from bending downwards.

The tab (8) has a protruding portion (80) projecting anteriorly from the gap (G) between the front portion (61) of the support and the front portion (51) of the load cell, so that it can be grasped by an operator.

The tab (8) has a hole (81) suitable for being disposed in register with the second through hole (63b) of the rear portion (61) of the support and the second threaded through hole (53b) of the front portion of the load cell.

Moreover, the safety system (S) comprises a safety screw (9) that crosses the second front hole (13b) of the base and the second through hole (63b) of the front portion of the support and is screwed into the second threaded through hole (53b) of the front portion (51) of the load cell.

In view of the above, the front portion (51) of the load cell is locked in position and is prevented from bending upwards due to an accidental upward thrust on the seat (30) of the bracket.

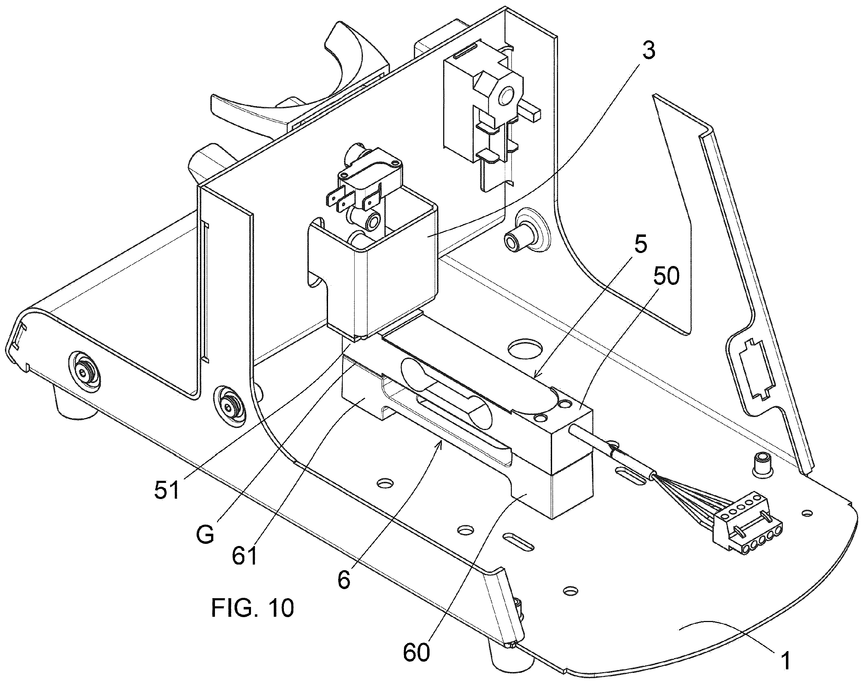

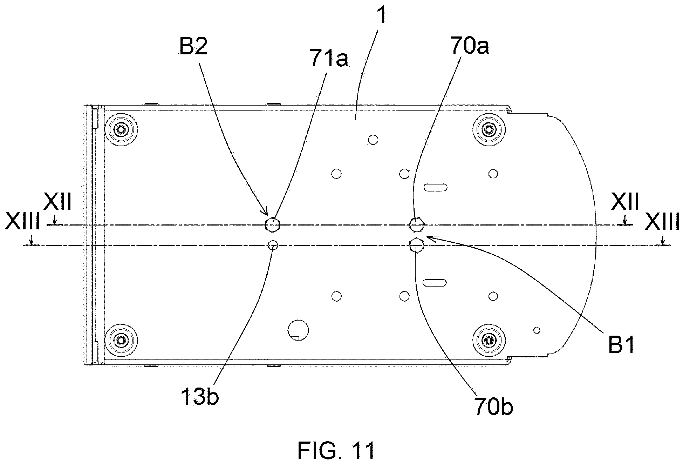

When the transportation of the coffee grinder (100) is completed, the safety screw (9) is unscrewed and removed. Then the tab (8) is extracted from the gap (G) between the front portion (61) of the support and the front portion (51) of the load cell. Now the coffee grinder (100) is ready to be used, as shown in Figs. 10 to 13A.

In particular, Figs. 9 and 13A illustrate an embodiment of the support (6) wherein the second through hole (63b) of the front portion of the support is a threaded hole. In such a case, the safety screw (9) is screwed into the thread of the second through hole (63b) of the front portion of the support, as shown in Fig. 8A.

In such a case, the safety screw (9) is only used to lock the front portion (51) of the load cell during the transportation of the coffee grinder, and then the safety screw (9) is removed when the coffee grinder is used.

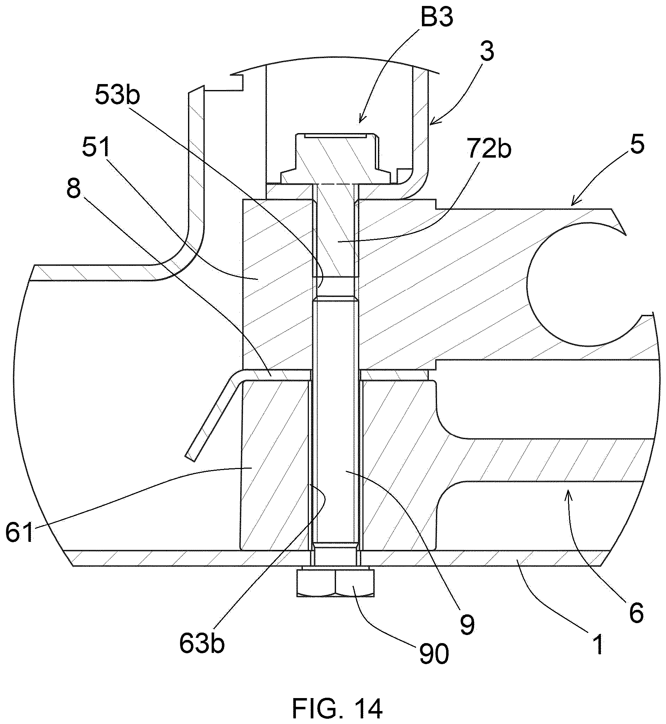

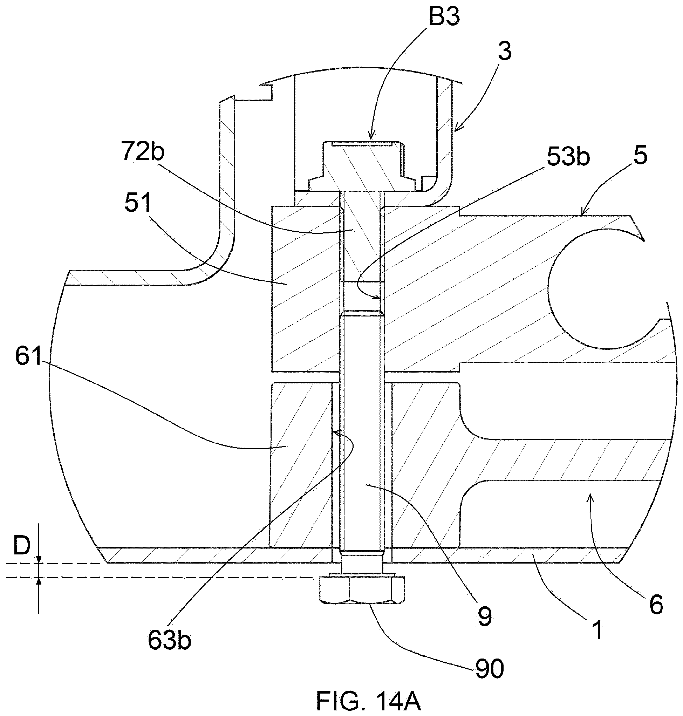

With reference to Figs. 14 and 14A, an embodiment of the support (6) is illustrated, wherein the second through hole (63b) of the front portion (61) of the support is not threaded, it being a hole having a larger diameter than the outer diameter of the shank of the safety screw (9), so that the safety screw (9) can slide into the second through hole (63b) of the front portion (61) of the support.

As shown in Fig. 14, during the transportation of the coffee grinder, the safety screw (9) is screwed into the second threaded through hole (53b) of the front portion (51) of the load cell, thus compressing the tab (8) between the front portion (61) of the support and the front portion (51) of the load cell in order to lock the front portion (51) of the load cell in position.

When the transportation of the grinder is completed, the safety screw (9) is unscrewed and removed, and the tab (8) is removed. Then, as shown in Fig. 14A, the safety screw (9) is screwed into the second threaded through hole (53b) of the front portion (51) of the load cell, until the head (90) of the safety screw is placed at a suitable distance (D) from the base (1) to prevent an excessive upward bending of the front portion (51) of the load cell that would damage the load cell. In such a way, being stopped against the base (1), the head (90) of the safety screw (9) acts as stop for an upward bending travel of the front portion (51) of the load cell.

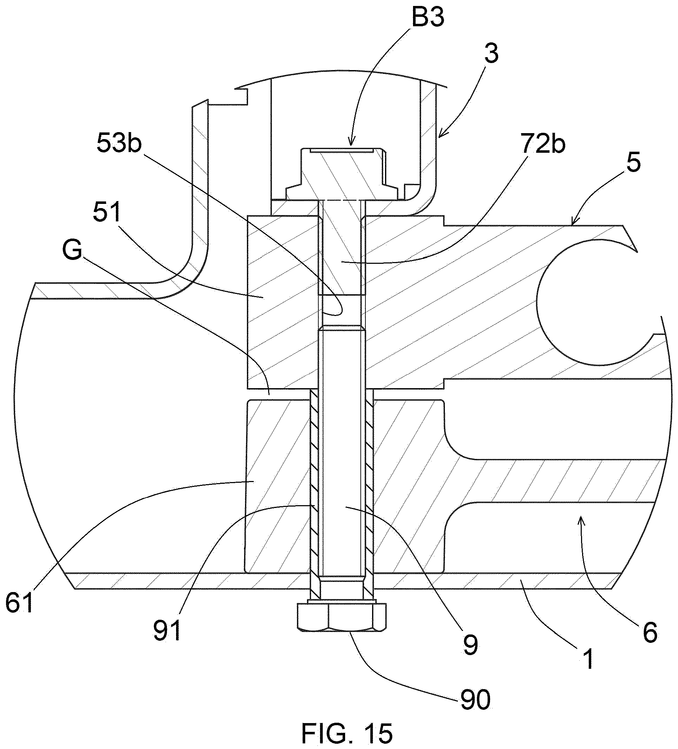

Referring to Fig. 15, advantageously, the safety screw (9) can be screwed into a bushing (91) with a smooth outer surface that is guided and slides on the inner surface of the second through hole (63b) of the front portion (61) of the support. The bushing (91) is disposed in a lower part of the shank of the safety screw (9) in such a way not to protrude superiorly from the front portion (61) of the support. The bushing (91) may be made of a material, such as polytetrafluoroethylene (PTFE), having a low friction coefficient with respect to the surface of the through hole (63b) of the front portion (61) of the support.

Equivalent variations and modifications may be made to the present embodiments of the invention, within the scope of a person skilled in the art, without departing from the scope of the invention as expressed by the appended claims.

## Claims

1. Coffee grinder (100) comprising:
- a base (1) whereon a frame (2) is mounted,
- a grinding unit (20) arranged in the frame (1),
- an electric motor (21) that drives the grinding unit (20),
- a hopper (22) ending into the grinding unit (20) for feeding coffee beans,
- a dispenser (22) in communication with the grinding unit (20) for dispensing coffee powder,
- a bracket (3) movably mounted in a front partition (10) arranged on the base (1); said bracket (3) having a seat (30) suitable for supporting a filter holder (4) so that a filter (40) of the filter holder is disposed under the dispenser (23) for receiving the coffee powder, and
- a load cell (5) connected to said bracket (3) for measuring the weight of the coffee powder contained in the filter (40) of the filter holder arranged in the seat (30) of the bracket; said load cell (5) having a rear portion (50) and a front portion (51) fixed to said bracket (3),
- a support (6) fixed to the base (1); said support (6) having a rear portion (60) and a front portion (61);
wherein the load cell (5) is mounted on the support (6) so that the rear portion (50) of the load cell is securely fixed to the rear portion (60) of the support and the front portion (51) of the load cell is spaced away from the front portion (61) of the support in such a way to leave a gap (G) between the front portion (61) of the support and the front portion (51) of the load cell; wherein the width of the gap (G) is such to permit a downward bending of the front portion (51) of the load cell that is lower than a maximum load limit of the load cell.

2. The coffee grinder (100) according to claim 1, wherein the load cell (5) has a parallelepiped shape having a length greater than a width and the support (6) has a length equal to the length of the load cell (5) and a width equal to the width of the load cell.

3. The coffee grinder (100) according to claim 1 or 2, wherein the support (6) has an H-shaped longitudinal section.

4. The coffee grinder (100) according to claim 2 or 3, wherein the support (6) is fixed to the base (1) in such a way that a longitudinal axis of the support is disposed at a centerline of the base, and the front portion (61) of the support is close to the front partition (10) of the base.

5. The coffee grinder (100) according to any one of the preceding claims, comprising:
- first screw means (B1) securing the rear portion (60) of the support to the base (1) and the rear portion (50) of the load cell to the rear portion (60) of the support,
- second screw means (B2) securing the front portion (61) of the support to the base (1), and
- third screw means (B3) securing the bracket (3) to the front portion (51) of the load cell.

6. The coffee grinder (100) according to claim 5, wherein
the rear portion (60) of the support comprises a first through hole (62a) and a second through hole (62b);
the front portion (61) of the support comprises a first threaded hole (63a);
the rear portion (50) of the load cell comprises a first threaded hole (52a) and a second threaded hole (52b);
the front portion (51) of the load cell comprises a first threaded hole (53a) and a second threaded through hole (53b);
the base (1) has a first rear hole (12a), a second rear hole (12b) and a first front hole (13a);
the bracket (3) has a horizontal bracket (32) having a first hole (33a) and a second hole (33b);
the first screw means (B1) comprise:
- a first rear screw (70a) that crosses the first rear hole (12a) of the base and the first through hole (62a) of the rear portion (60) of the support and is screwed into the first threaded hole (52a) of the rear portion (50) of the load cell, and
- a second rear screw (70b) that crosses the second rear hole (12b) of the base and the second through hole (62b) of the rear portion (60) of the support and is screwed into the second threaded hole (52b) of the rear portion (50) of the load cell;
the second screw means (B2) comprise a front screw (71a) that crosses the first front hole (13a) of the base and is screwed into the first threaded hole (53a) of the front portion (61) of the support;
the third screw means (B3) comprise:
- a first upper screw (72a) that crosses the first hole (33a) of the bracket and is screwed into the first threaded hole (53a) of the front portion (51) of the load cell;
- a second upper screw (72b) that crosses the second hole (33b) of the bracket and is screwed into the second threaded through hole (53b) of the front portion (51) of the load cell; wherein the length of the shank of the second upper screw (72) is lower than the length of the second threaded through hole (53b) of the front portion (51) of the load cell.

7. The coffee grinder (100) according to any one of the preceding claims, comprising a safety system (S) for locking the load cell (5) in position during the transportation of the coffee grinder, so as to prevent the front portion (51) of the load cell from bending due to accidental impacts on the seat (30) of the bracket.

8. The coffee grinder (100) according to claim 7, wherein said safety system (S) comprises a tab (8) having a thickness equal to the width of the gap (G) between the front portion (61) of the support and the front portion (51) of the load cell; said tab (8) being arranged in the gap (G) between the front portion (61) of the support and the front portion (51) of the load cell, so that the front portion (51) of the load cell is prevented from bending downwards.

9. The coffee grinder (100) according to claim 7 when dependent on claim 6, wherein said front portion (61) of the support comprises a second through hole (63b) and said base (1) comprises a second front hole (13b) and said safety system (S) comprises a safety screw (9) that crosses said second hole (13b) of the base and said second through hole (63b) of the front portion of the support and is screwed into said second threaded through hole (53b) of the front portion of the load cell.

10. The coffee grinder (100) according to claim 8 when dependent on claim 6, wherein said front portion (61) of the support comprises a second through hole (63b) and said base (1) comprises a second front hole (13b) and said safety system (S) comprises a safety screw (9) that crosses said second hole (13b) of the base, said second through hole (63b) of the front portion of the support and a hole (81) of said tab (8) and is screwed into said second threaded through hole (53b) of the front portion of the load cell.

11. The coffee grinder (100) according to claim 9 or 10, wherein said second through hole (63b) of the front portion (61) of the support is a threaded hole into which said safety screw (9) is screwed.

12. The coffee grinder (100) according to claim 9 or 10, wherein said second through hole (63b) of the front portion (61) of the support is a nonthreaded hole having a diameter greater than the outer diameter of said safety screw (9), so that said safety screw (9) can slide in the second through hole (63b) of the front portion (61) of the support.

13. The coffee grinder (100) according to claim 12, comprising a bushing (91) screwed into said safety screw (9); said bushing (91) being slidably mounted in said through hole (63b) of the front portion (61) of the support.

## Patentansprüche

1. Kaffeemühle (100), umfassend:
- einen Sockel (1), auf dem ein Gestell (2) montiert ist,
- eine Mahlgruppe (20), die im Gestell (1) angeordnet ist,
- einen elektrischen Motor (21), der die Mahlgruppe (20) antreibt,
- einen Trichter (22), der in der Mahlgruppe (20) endet, um Kaffeebohnen zuzuführen,
- eine Abgabevorrichtung (22), die mit der Mahlgruppe (20) in Verbindung steht, um Kaffeemehl abzugeben,
- einen Bügel (3), der beweglich in einer vorderen Trennwand (10) montiert ist, die auf dem Sockel (1) angeordnet ist; wobei der Bügel (3) einen Sitz (30) aufweist, der dazu bestimmt ist, einen Filterhalter (4) zu tragen, so dass ein Filter (40) des Filterhalters sich unterhalb der Abgabevorrichtung (23) befindet, um das Kaffeemehl aufzunehmen, und
- eine Wägezelle (5), die mit dem Bügel (3) verbunden ist, um das Gewicht des Kaffeemehls zu messen, das in dem Filter (40) des Filterhalters enthalten ist, der des in dem Sitz (30) des Bügels angeordnet ist; wobei die Wägezelle (5) einen hinteren Abschnitt (50) und einen vorderen Abschnitt (51) aufweist, der an dem Bügel (3) befestigt ist,
- einen Träger (6) der an dem Sockel (1) befestigt ist; wobei der Träger (6) einen hinteren Abschnitt (60) und einen vorderen Abschnitt (61) aufweist;
wobei die Wägezelle (5) auf dem Träger (6) montiert ist, so dass der hintere Abschnitt (50) der Wägezelle fest an dem hinteren Abschnitt (60) des Trägers befestigt ist und der vordere Abschnitt (51) der Wägezelle von dem vorderen Abschnitt (61) des Trägers beabstandet ist, so dass ein Zwischenraum (G) zwischen dem vorderen Abschnitt (61) des Trägers und dem vorderen Abschnitt (51) der Wägezelle verbleibt; wobei die Weite des Zwischenraums (G) derart ist, dass eine Abwärtsbiegung des vorderen Abschnitts (51) der Wägezelle ermöglicht wird, die geringer als die maximale Belastungsgrenze der Wägezelle ist.

2. Kaffeemühle (100) nach Anspruch 1, wobei die Wägezelle (5) die Form eines Parallelepipeds aufweist, dessen Länge größer als eine Breite ist und der Träger (6) eine Länge aufweist, die gleich der Länge der Wägezelle (5) ist und eine Breite, die gleich der Breite der Wägezelle ist.

3. Kaffeemühle (100) nach Anspruch 1 oder 2, wobei der Träger (6) einen H-förmigen Längsschnitt aufweist.

4. Kaffeemühle (100) nach Anspruch 2 oder 3, wobei der Träger (6) an dem Sockel (1) so befestigt ist, dass eine Längsachse des Trägers auf einer Mittellinie des Sockels angeordnet ist und der vordere Abschnitt (61) des Trägers sich nahe der vorderen Trennwand (10) des Sockels befindet.

5. Kaffeemühle (100) nach einem der vorstehenden Ansprüche, umfassend:
- erste Schraubenmittel (B1), die den hinteren Abschnitt (60) des Trägers an dem Sockel (1) befestigen und den hinteren Abschnitt (50) der Wägezelle an dem hinteren Abschnitt (60) des Trägers befestigen,
- zweite Schraubenmittel (B2), die den vorderen Abschnitt (61) des Trägers an dem Sockel (1) befestigen und
- dritte Schraubenmittel (B3), die den Bügel (3) an dem vorderen Abschnitt (51) der Wägezelle befestigen.

6. Kaffeemühle (100) nach Anspruch 5, wobei
der hintere Abschnitt (60) des Trägers ein erstes Durchgangsloch (62a) und ein zweites Durchgangsloch (62b) umfasst;
der vordere Abschnitt (61) des Trägers ein erstes Gewindeloch (63a) umfasst;
der hintere Abschnitt (50) der Wägezelle ein erstes Durchgangsloch (52a) und ein zweites Durchgangsloch (62b) umfasst;
der vordere Abschnitt (51) der Wägezelle ein erstes Gewindeloch (53a) und ein zweites Gewindeloch (53b) umfasst;
der Sockel (1) ein erstes hinteres Loch (12a), ein zweites hinteres Loch (12b) und ein erstes vorderes Loch (13a) aufweist;
der Bügel (3) einen horizontalen Bügel (32) mit einem ersten Loch (33a) und einem zweiten Loch (33b) aufweist;
die ersten Schraubenmittel (B1) umfassen:
- eine erste hintere Schraube (70a), die das erste hintere Loch (12a) des Sockels und das erste Durchgangsloch (62a) des hinteren Abschnitts (60) des Trägers durchquert und sich in das erste Gewindeloch (52a) des hinteren Abschnitts (50) der Wägezelle einschraubt, und
- eine zweite hintere Schraube (70b), die das zweite hintere Loch (12b) des Sockels und das zweite Durchgangsloch (62b) des hinteren Abschnitts (60) des Trägers durchquert und sich in das zweite Gewindeloch (52b) des hinteren Abschnitts (50) der Wägezelle einschraubt;
wobei die zweiten Schraubenmittel (B2) eine vordere Schraube (71a) umfassen, die das erste vordere Loch (13a) des Sockels durchquert und sich in das erste Gewindeloch (53a) des vorderen Abschnitts (61) des Trägers einschraubt;
wobei die dritten Schraubenmittel (B3) umfassen:
- eine erste obere Schraube (72a), die das erste Loch (33a) des Bügels durchquert und sich in das erste Gewindeloch (53a) des vorderen Abschnitts (51) der Wägezelle einschraubt;
- eine zweite obere Schraube (72b), die das zweite Loch (33b) des Bügels durchquert und sich in das zweite Gewindeloch (53b) des vorderen Abschnitts (51) der Wägezelle einschraubt; wobei die Länge des Stiels der zweiten oberen Schraube (72) geringer ist als die Länge des zweiten Gewindedurchgangslochs (53b) des vorderen Abschnitts (51) der Wägezelle.

7. Kaffeemühle (100) nach einem der vorstehenden Ansprüche, umfassend ein Sicherheitssystem (S), um die Wägezelle (5) während des Transports der Kaffeemühle in Position zu blockieren, um ein Biegen des vorderen Abschnitts (51) der Wägezelle infolge von unbeabsichtigten Stößen auf den Sitz (30) des Bügels zu vermeiden.

8. Kaffeemühle (100) nach Anspruch 7, wobei das Sicherheitssystem (S) eine Lasche (8) mit einer Dicke umfasst, die gleich der Weite des Zwischenraums (G) zwischen dem vorderen Abschnitt (61) des Trägers und dem vorderen Abschnitt (51) der Wägezelle ist; wobei die Lasche (8) in dem Zwischenraum (G) zwischen dem vorderen Abschnitt (61) des Trägers und dem vorderen Abschnitts (51) der Wägezelle angeordnet ist, so dass der vordere Abschnitt (51) der Wägezelle sich nicht nach unten biegen kann.

9. Kaffeemühle (100) nach Anspruch 7, sofern abhängig von Anspruch 6, wobei der vordere Abschnitt (61) des Trägers ein zweites Durchgangsloch (63b) umfasst und der Sockel (1) ein zweites vorderes Loch (13b) umfasst und das Sicherheitssystem (S) eine Sicherheitsschraube (9) umfasst, die das zweite Loch (13b) des Sockels durchquert und das zweite Durchgangsloch (63b) des vorderen Abschnitts des Trägers sich in das zweite Gewindedurchgangsloch (53b) des vorderen Abschnitts der Wägezelle einschraubt.

10. Kaffeemühle (100) nach Anspruch 8, sofern abhängig von Anspruch 6, wobei der vordere Abschnitt (61) des Trägers ein zweites Durchgangsloch (63b) umfasst und der Sockel (1) ein zweites vorderes Loch (13b) umfasst und das Sicherheitssystem (S) eine Sicherheitsschraube (9) umfasst, die das zweite Loch (13b) des Sockels, das zweite Durchgangsloch (63b) des vorderen Abschnitts des Trägers und ein Loch (81) der Lasche (8) durchquert und sich in das zweite Gewindedurchgangsloch (53b) des vorderen Abschnitts der Wägezelle einschraubt.

11. Kaffeemühle (100) nach Anspruch 9 oder 10, wobei das zweite Durchgangsloch (63b) des vorderen Abschnitts (61) des Trägers ein Gewindeloch ist, in das die Sicherheitsschraube (9) sich einschraubt.

12. Kaffeemühle (100) nach Anspruch 9 oder 10, wobei das zweite Durchgangsloch (63b) des vorderen Abschnitts (61) des Trägers ein gewindefreies Loch ist, dessen Durchmesser größer ist als der Außendurchmesser der Sicherheitsschraube (9), so dass die Sicherheitsschraube (9) in dem zweiten Durchgangsloch (63b) des vorderen Abschnitts (61) des Trägers gleiten kann.

13. Kaffeemühle (100) nach Anspruch 12, umfassend eine Buchse (91), die auf die Sicherheitsschraube (9) aufgeschraubt ist; wobei die Buchse (91) gleitbeweglich in dem Durchgangsloch (63b) des vorderen Abschnitts (61) des Trägers montiert ist.

## Revendications

1. Moulin à café (100) comprenant :
- une base (1) sur laquelle un châssis (2) est monté,
- un groupe de meules (20) disposé sur le châssis (1),
- un moteur électrique (21) qui actionne le groupe de meules (20),
- une trémie (22) qui conduit au groupe de meules (20), pour l'alimentation de café en grains,
- un distributeur (22) en communication avec le groupe de meules (20) pour distribuer du café en poudre,
- un étrier (3) monté mobile dans une paroi antérieure (10) disposée sur la base (1) ; ledit étrier (3) ayant un emplacement (30) apte à soutenir un porte-filtre (4), de manière qu'un filtre (40) du porte-filtre se trouve au-dessous du distributeur (23) pour recevoir le café en poudre, et
- une cellule de charge (5) reliée au susdit étrier (3) pour mesurer le poids du café en poudre contenu dans le filtre (40) du porte-filtre disposé dans l'emplacement (30) de l'étrier ; ladite cellule de charge (5) ayant une portion postérieure (50) et une portion antérieure (51) fixée au susdit étrier (3),
- un support (6) fixé à la base (1) ; ledit support (6) ayant une portion postérieure (60) et une portion antérieure (61) ;
où la cellule de charge (5) est montée sur le support (6), de manière que la portion postérieure (50) de la cellule de charge soit solidement fixée à la portion postérieure (60) du support et la portion antérieure (51) de la cellule de charge soit distanciée de la portion antérieure (61) du support afin de laisser un écartement (G) entre la portion antérieure (61) du support et la portion antérieure (51) de la cellule de charge ; où la largeur du susdit écartement (G) est telle qu'elle permet une flexion vers le bas de la portion antérieure (51) de la cellule de charge qui est inférieure à une limite de charge maximum de la cellule de charge.

2. Moulin à café (100) selon la revendication 1, où la cellule de charge (5) a une forme parallélépipède avec une longueur majeure d'une largeur et le support (6) a une longueur égale à la longueur de la cellule de charge (5) et une largeur égale à la largeur de la cellule de charge.

3. Moulin à café (100) selon la revendication 1 ou 2, où le support (6) a une section longitudinale en forme de « H ».

4. Moulin à café (100) selon la revendication 2 ou 3, où le support (6) est fixé à la base (1) de manière qu'un axe longitudinal du support soit disposé en correspondance d'une ligne centrale de la base et la portion antérieure (61) du support soit proche de la paroi antérieure (10) de la base.

5. Moulin à café (100) selon l'une quelconque des revendications précédentes, comprenant :
- des premiers moyens à vis (B1) qui fixent la portion postérieure (60) du support à la base (1) et la portion postérieure (50) de la cellule de charge à la portion postérieure (60) du support,
- des deuxièmes moyens à vis (B2) qui fixent la portion antérieure (61) du support à la base (1), et
- des troisièmes moyens à vis (B3) qui fixent l'étrier (3) à la portion antérieure (51) de la cellule de charge.

6. Moulin à café (100) selon la revendication 5, où
la portion postérieure (60) du support comprend un premier trou passant (62a) et un second trou passant (62b) ;
la portion antérieure (61) du support comprend un premier trou fileté (63a) ;
la portion postérieure (50) de la cellule de charge comprend un premier trou fileté (52a) et un second trou fileté (52b) ;
la portion antérieure (51) de la cellule de charge comprend un premier trou fileté (53a) et un second trou passant fileté (53b) ;
la base (1) a un premier trou postérieur (12a), un second trou postérieur (12b) et un premier trou antérieur (13a) ;
l'étrier (3) a une bride horizontale (32) ayant un premier trou (33a) et un second trou (33b) ;
les premiers moyens à vis (B1) comprennent :
- une première vis postérieure (70a) qui traverse le premier trou postérieur (12a) de la base et le premier trou passant (62a) de la portion postérieure (60) du support et se visse dans le premier trou fileté (52a) de la portion postérieure (50) de la cellule de charge, et
- une seconde vis postérieure (70b) qui traverse le second trou postérieur (12b) de la base et le second trou passant (62b) de la portion postérieure (60) du support et se visse dans le second trou fileté (52b) de la portion postérieure (50) de la cellule de charge ;
les deuxièmes moyens à vis (B2) comprennent une vis antérieure (71a) qui traverse le premier trou antérieur (13a) de la base et se visse dans le premier trou fileté (53a) de la portion antérieure (61) du support ;
les troisièmes moyens à vis (B3) comprennent :
- une première vis supérieure (72a) qui traverse le premier trou (33a) de l'étrier et se visse dans le premier trou fileté (53a) de la portion antérieure (51) de la cellule de charge ;
- une seconde vis supérieure (72b) qui traverse le second trou (33b) de l'étrier et se visse dans le second trou fileté passant (53b) de la portion antérieure (51) de la cellule de charge ; où la longueur de la tige de la seconde vis supérieure (72) est inférieure par rapport à la longueur du second trou fileté passant (53b) de la portion antérieure (51) de la cellule de charge.

7. Moulin à café (100) selon l'une quelconque des revendications précédentes, comprenant un système de sécurité (S) pour bloquer en position la cellule de charge (5) pendant le transport du moulin à café, aux fins d'éviter que la portion antérieure (51) de la cellule de charge ne se courbe suite à des heurts accidentels sur l'emplacement (30) de l'étrier.

8. Moulin à café (100) selon la revendication 7, où ledit système de sécurité (S) comprend une languette (8) ayant une épaisseur égale à la largeur de l'écartement (G) entre la portion antérieure (61) du support et la portion antérieure (51) de la cellule de charge ; ladite languette (8) étant disposée dans l'écartement (G) entre la portion antérieure (61) du support et la portion antérieure (51) de la cellule de charge, de manière que la portion antérieure (51) de la cellule de charge ne puisse pas se courber vers le bas.

9. Moulin à café (100) selon la revendication 7 quand dépendante de la revendication 6, où ladite portion antérieure (61) du support comprend un second trou passant (63b) et ladite base (1) comprend un second trou antérieur (13b) et ledit système de sécurité (S) comprend une vis de sécurité (9) qui traverse ledit second trou (13b) de la base et ledit second trou passant (63b) de la portion antérieure du support et se visse dans le susdit second trou fileté passant (53b) de la portion antérieure de la cellule de charge.

10. Moulin à café (100) selon la revendication 8 quand dépendante de la revendication 6, où ladite portion antérieure (61) du support comprend un second trou passant (63b) et ladite base (1) comprend un second trou antérieur (13b) et ledit système de sécurité (S) comprend une vis de sécurité (9) qui traverse le susdit second trou (13b) de la base, le susdit second trou passant (63b) de la portion antérieure du support et un trou (81) de ladite languette (8) et se visse dans le susdit second trou fileté passant (53b) de la portion antérieure de la cellule de charge.

11. Moulin à café (100) selon la revendication 9 ou 10, où ledit second trou passant (63b) de la portion antérieure (61) du support est un trou fileté dans lequel se visse la susdite vis de sécurité (9).

12. Moulin à café (100) selon la revendication 9 ou 10, où ledit second trou passant (63b) de la portion antérieure (61) du support est un trou non fileté ayant un diamètre majeur du diamètre externe de ladite vis de sécurité (9), de manière que la vis de sécurité (9) puisse glisser dans le second trou passant (63b) de la portion antérieure (61) du support.

13. Moulin à café (100) selon la revendication 12, comprenant une douille (91) vissée dans ladite vis de sécurité (9) ; ladite douille (91) étant montée coulissante dans ledit trou passant (63b) de la portion antérieure (61) du support.
